# EUROPÄISCHE PATENTSCHRIFT

(11) **EP 3 652 353 B1**
(45) Veröffentlichungstag und Bekanntmachung des Hinweises auf die Patenterteilung: **23.06.2021**
(21) Anmeldenummer: 18727305.7
(22) Anmeldetag: 29.05.2018
(51) Int. Cl.: C21D 9/56, F27B 9/28, F27D 7/06, F27D 99/00

(54) **VERFAHREN ZUR REDUKTION VON STICKOXIDEN IN BANDBEHANDLUNGSÖFEN**
METHOD FOR REDUCING NITROGEN OXIDES IN STRIP TREATMENT FURNACES
PROCÉDÉ DE RÉDUCTION D'OXYDES D'AZOTE DANS DES FOURS DE TRAITEMENT DE BANDES

(30) Priorität: 13.07.2017 AT 505832017
(43) Veröffentlichungstag der Anmeldung: 20.05.2020
(73) Patentinhaber: Andritz Technology and Asset Management GmbH, 8045 Graz (AT)
(72) Erfinder: BORREL, Pierre-Jerome, 93100 Montreuil (FR); BLAKE, Eric, Sewickley Pennsylvania 151543 (US)
(74) Vertreter: Tschinder, Thomas
(86) Internationale Anmeldenummer: PCT/EP2018/064058
(87) Internationale Veröffentlichungsnummer: WO 2019/011517

(56) Entgegenhaltungen:
- WO-A1-2009/009809
- AT-A4- 517 848
- DE-A1-102007 007 324
- DE-C1- 10 123 241
- US-A1- 2013 277 896

## Beschreibung

Den Gegenstand dieser Erfindung bildet ein Verfahren zur Behandlung eines Metallbandes in einem direkt befeuerten Ofen, durch den das Band hindurchgeführt wird. Der Ofen wird dabei mit Gasbrennern direkt beheizt und weist in Bandlaufrichtung betrachtet vor der direkt beheizten Zone einen nicht beheizten Bereich auf, durch den die Abgase des beheizten Bereiches hindurchströmen und das Metallband vorwärmen, bevor es in der direkt befeuerten Zone weiter erwärmt wird. Die Abgase werden nach dem nicht beheizten Bereich in einer Nachverbrennungskammer nachverbrannt.

Diese Wärmebehandlung von Metallbändern erfolgt häufig vor dem Verzinken eines Metallbandes oder auch in Glühöfen nach einer Beizlinie.

Eine Möglichkeit zur Wärmebehandlung ist die Verwendung von direkt befeuerten Öfen (DFF, direct fired furnace), bei denen die Brenner direkt im Ofeninneren angeordnet sind. Bei diesen Öfen gibt es eine Vorwärmzone in der das kontinuierlich hindurchgeführte Metallband mit Hilfe der heißen Abgase aus dem direkt befeuerten Ofen auf ungefähr 200 - 300°C vorgewärmt wird.

Die AT 517 848 A offenbart ein Verfahren zur Wärmebehandlung eines Metallbandes, wobei das Metallband kontinuierlich mit Hilfe von heißem Gas vorgewärmt und anschließend in einem direkt-befeuerten Ofen wärmebehandelt wird.

Die Brenner der direkt befeuerten Öfen werden in der Regel mit Gas (Erdgas oder Koksofengas) betrieben. Bei der Verbrennung entstehen Stickoxide (NOₓ), die im Abgas enthalten sind. Unter der Bezeichnung Stickoxid (NOₓ) versteht man die Summe der beim Verbrennungsprozess entstandenen Oxide des Stickstoffes, dabei kommt den Verbindungen NO und NO₂ in der Regel die größte Bedeutung zu. NOₓ kann entweder bei der Umsetzung des Brennstoffes oder durch die hohen Prozesstemperaturen direkt aus der Verbrennungsluft entstehen.
Die Richtlinien hinsichtlich der Stickoxidemissionen werden immer mehr verschärft. Durch neu entwickelte Gasbrenner konnten neben weiterer Maßnahmen die Stickoxidemissionen von direkt befeuerten Öfen zur Bandbehandlung zwar schon erheblich reduziert werden, jedoch wäre eine weitere Reduktion durchaus wünschenswert.

Der Erfindung liegt daher die Aufgabe zugrunde, ein kostengünstiges Verfahren bereitzustellen, mit dem die Stickoxidemissionen weiter reduziert werden können.

Gelöst wird diese Aufgabe durch ein Verfahren gemäß Patentanspruch 1. Bei diesem Verfahren wird in den nicht beheizten Bereich Methan (CH₄) in das Abgas eingedüst bzw. eingeblasen, wodurch im Abgas enthaltene Stickoxide (NOₓ) mit dem Methan reagieren und wobei sich überwiegend Cyanwasserstoff (HCN) bildet (Reburning). Dieser Ofenbereich ist weitgehend frei von freiem Sauerstoff.

Eine Nachverbrennung von Stickoxiden ist zwar bei anderen Anlagen, wie bei Kohlekraftwerken oder Müllverbrennungsanlagen bekannt, doch liegt dort die Stickoxidmenge in einer viel höheren Konzentration vor. Beispielsweise wird die Stickoxidmenge in einem 100 MW Kohlekraftwerk von 3000 mg/Nm³ durch geeignete Nachverbrennung auf 500 mg/Nm³ reduziert.
In einem modernen direkt befeuerten Ofen für die Metallbandbehandlung liegt die aktuelle Stickoxidmenge bei nur 120 mg/Nm³, also ohnehin schon vergleichsweise niedrig.

Durch die vorliegende Erfindung kann dieser Wert noch weiter auf 80 mg/Nm³ reduziert werden.

Es ist günstig, wenn in die Nachverbrennungskammer Luft oder Sauerstoff eingedüst wird, wodurch der gebildete Cyanwasserstoff wieder abgebaut wird.

Vorzugsweise wird dem Methan vor der Eindüsung in den nicht beheizten Bereich Stickstoff zugeführt. Durch die Zufuhr von Stickstoff lässt sich das Methan besser mit den Abgasen vermischen. Die Vermischung und Eindüsung von Methan und Stickstoff kann dabei mit Hilfe von Venturidüsen erfolgen. Es ist auch möglich für diese Aufgabe einen herkömmlichen Brenner zu verwenden, bei dem die Verbrennungsluft durch Stickstoff ersetzt wird.
Das Verhältnis von Methan zu Stickstoff kann im Bereich von 1:10 liegen.

Das Methan kann an mehreren Stellen in den nicht beheizten Bereich eingedüst werden, die unterschiedlich weit vom nächstliegenden Brenner entfernt sind.

Im Folgenden wird ein Ausführungsbeispiel der Erfindung anhand von Zeichnungen beschrieben. Es zeigen:
Fig. 1 eine schematische Ansicht eines direkt befeuerten Ofens zur Bandbehandlung;
Fig. 2 eine Seitenansicht des Ofenbereiches 7, in dem das Methan eingedüst wird;
Fig. 3 ein Schnitt durch den nicht befeuerten Ofenbereich 7;

Gleiche Bezugszeichen in den einzelnen Abbildungen bezeichnen jeweils gleiche Anlagenteile.

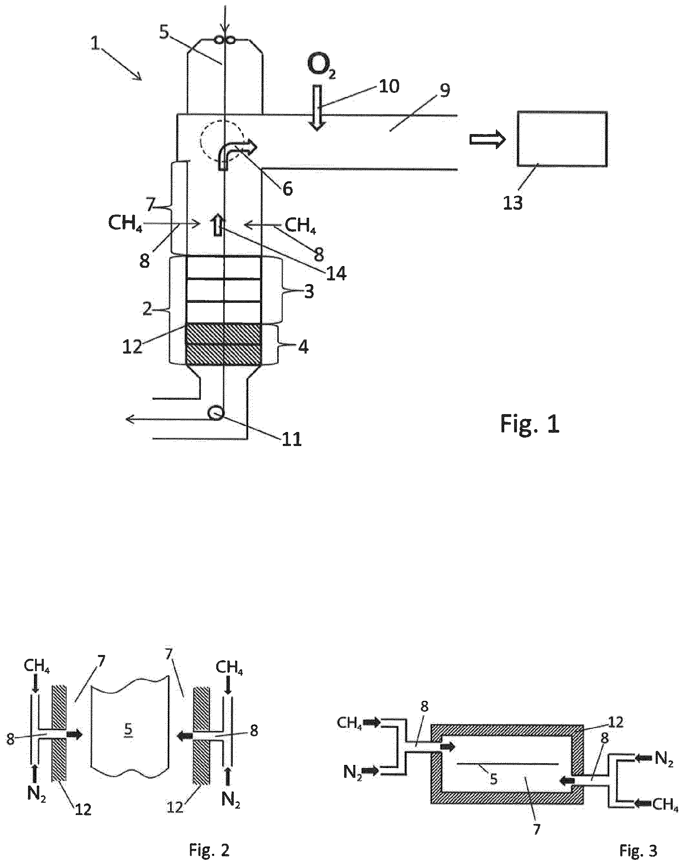

In Figur 1 ist ein Teil eines direkt befeuerten Ofens 1 dargestellt, in dem ein Metallband 5 wärmebehandelt wird. Das Metallband 5 wird von oben in das Ofeninnere geführt und durchläuft zuerst den nicht beheizten Bereich 7, der eine Länge von mehreren Metern aufweist und in dem das Metallband 5 vorgewärmt wird. Unter dem nicht beheizten Bereich 7 wird hier der Bereich verstanden, der in Bandlaufrichtung betrachtet vor dem beheizten Bereich 2 angeordnet ist und in dem keine Brenner angeordnet sind.

Im beheizten Bereich 2 des Ofens 1 wird das Metallband 5 mit Hilfe von Gasbrennern erwärmt. Dabei durchläuft das Metallband 5 zuerst eine Zone 3, in der Brenner vom Typ "Nozzle Mix" in der Ofenwand 12 angeordnet sind und danach eine Zone 4 mit Brennern vom Typ "Premix". Am unteren Ende des Ofens 1 wird das Metallband 5 mit Hilfe der Umlenkwalze 11 umgelenkt und beispielsweise einem mit Strahlrohren beheizten Ofen (radiant tube furnace, RTF) zugeführt.

Das durch die Gasbrenner in der direkt beheizten Zone 2 gebildete Abgas 14 strömt im Ofen 1 nach oben und wird dort in Richtung 6 umgelenkt in bekannter Weise einer Nachbrennkammer 9 zugeführt, in der ein Nachbrenner zur Nachverbrennung der Abgase 14 angeordnet ist. Das Metallband 5 durchläuft die Nachbrennkammer 9 nicht. Die Abgase 14 enthalten auch Stickoxide, im Wesentlichen NO und NO₂. Zur Verminderung dieses Stickoxidanteils wird in den nicht beheizten Bereich 7 des Ofens 1 Methan (CH₄) über die Zufuhrleitungen 8 eingedüst bzw. mit Hilfe von Stickstoff eingeblasen. Das Methan vermischt sich mit den heißen Abgasen und die Stickoxide reagieren mit dem Methan zu Cyanwasserstoff.

Die benötigten Methangasmengen können dabei relativ gering sein. Für einen handelsüblichen Ofen 1 können bereits 5 m³/h ausreichend sein. Es ist sinnvoll, dass dieser nicht beheizte Bereich 7 weitgehend frei von Sauerstoff (O₂ Anteil < 0,05%) ist, damit nicht dieser mit dem eingeblasenen Methan reagiert. Zur Gewährleistung dieser Sauerstofffreiheit können zumindest die nächstliegenden Brenner mit einem Brennstoffüberschuss betrieben werden, damit allfällig vorhandener Sauerstoff zuvor verbrennt.

Zum Abbau des giftigen Cyanwasserstoffs wird in die Nachverbrennunsgkammer 9 über die Leitungen 10 Sauerstoff (O₂) oder Luft eingeblasen, dadurch reagiert der Cyanwasserstoff zu Stickstoff (N2), Kohlendioxid und Wasserstoff bzw. Wasserdampf. Schlussendlich werden diese Abgase nachdem sie erneut zur Bandvorwärmung verwendet wurden, einer Wärmerückgewinnung 13 zugeführt.

In Figur 2 ist die Methaneindüsung in den nicht beheizten Bereich 7 dargestellt. Man erkennt dabei, dass das Methangas vor der Eindüsung mit Stickstoff (N₂) vermischt wird und seitlich zu beiden Seiten des Metallbandes 5 eingeblasen wird.

Figur 3 zeigt einen Schnitt durch den Bereich 7. Die Methangaszufuhr erfolgt dabei so, dass sowohl der Bereich um die Metallbandvorderseite als auch der Bereich um die Metallbandhinterseite mit Methan angereichert wird, sodass möglichst das gesamte Abgas 14 mit Methan in Kontakt kommt. Es ist denkbar, dass die Methaneindüsung an mehreren Stellen mit unterschiedlichem Abstand zum direkt befeuerten Bereich 2 erfolgt, beispielsweise im Abstand von 1m, 2m und 3m vom nächstliegenden Brenner.

Die Methangaseindüsung lässt sich leicht in bestehende Anlagen nachrüsten und so die Stickoxidemission verringern. Mit dem vorliegenden Verfahren lassen sich NOₓ Werte im Bereich von 100 mg/Nm³ oder weniger erreichen.

Das erfindungsgemäße Verfahren kann natürlich auch in horizontalen oder L-förmigen direkt befeuerten Öfen angewendet werden.

## Patentansprüche

1. Verfahren zur Behandlung eines Metallbandes (5) in einem direkt befeuerten Ofen (1), durch den das Metallband (5) hindurchgeführt wird, wobei der Ofen (1) mit Gasbrennern direkt beheizt wird und wobei der Ofen (1) in Bandlaufrichtung betrachtet vor der direkt beheizten Zone (2) einen nicht beheizten Bereich (7) aufweist, durch den die Abgase (14) des beheizten Bereiches (2) hindurchströmen und das Metallband (5) vorwärmen und, **dadurch gekennzeichnet, dass** die Abgase (14) nach dem nicht beheizten Bereich (7) in einer Nachverbrennungskammer (9) nachverbrannt werden, wobei in den nicht beheizten Bereich (7) Methan in das Abgas (14) eingedüst oder eingeblasen wird, wodurch im Abgas (14) enthaltene Stickoxide in Cyanwasserstoff umgewandelt werden.

2. Verfahren nach Anspruch 1, **dadurch gekennzeichnet, dass** in die Nachverbrennungskammer (9) Luft oder Sauerstoff eingedüst wird, wodurch der Cyanwasserstoff abgebaut wird.

3. Verfahren nach Anspruch 1 oder 2, **dadurch gekennzeichnet, dass** dem Methan vor der Eindüsung in den nicht beheizten Bereich (7) Stickstoff zugeführt wird.

4. Verfahren nach einem der Ansprüche 1 bis 3, **dadurch gekennzeichnet, dass** das Methan an mehreren Stellen in den nicht beheizten Bereich (7) eingedüst wird.

5. Verfahren nach einem der Ansprüche 1 bis 4, **dadurch gekennzeichnet, dass** der nicht beheizte Bereich (7) Düsen (8) aufweist, über die im Störfall Stickstoff zur Kühlung des Metallbandes (5) eingeblasen wird, wobei im Normalbetrieb über diese Düsen (8) das Methan zur Stickoxidreduktion eingeblasen wird.

## Claims

1. Method for treating a metal strip (5) in a directly fired furnace (1) through which the metal strip (5) is guided, where the furnace (1) is fired directly by gas burners and has a non-fired zone (7) ahead of the directly fired zone (2), when viewed in strip running direction, through which the exhaust gases (14) from the fired zone (2) flow and pre-heat the metal strip (5), **characterized in that** the exhaust gases (14) undergo post-combustion in an afterburner chamber (9) after the non-fired zone (7), where methane is injected or blown into the exhaust gas (14) in the non-fired zone (7), which causes nitrogen oxides contained in the exhaust gas (14) to be converted into hydrogen cyanide.

2. Method according to Claim 1, **characterised in that** air or oxygen is injected into the post-combustion chamber (9), which degrades the hydrogen cyanide.

3. Method according to Claim 1 or 2, **characterised in that** nitrogen is added to the methane before it is injected into the non-fired zone (7).

4. Method according to one of Claims 1 to 3, **characterised in that** the methane is injected into the non-fired zone (7) at several points.

5. Method according to one of Claims 1 to 4, **characterised in that** the non-fired zone (7) has nozzles (8) through which nitrogen is blown in to cool the metal strip (5) in the event of a fault, where the methane to reduce the nitrogen content is blown in through these nozzles (8) in normal operation.

## Revendications

1. Procédé de traitement d'une bande de métal (5) dans un four à chauffage direct (1), que traverse la bande de métal (5), le four (1) étant chauffé directement par des brûleurs à gaz et le four (1), lorsqu'il est observé dans le sens de traitement de la bande, présentant avant la zone directement chauffée (2) une zone non chauffée (7), à travers laquelle passent les gaz d'échappement (14) de la zone chauffée (2) et qui préchauffent la bande de métal (5) et, **caractérisé en ce que** les gaz d'échappement (14) après la zone non chauffée (7) sont soumis à une postcombustion dans une chambre de postcombustion (9), dans la zone non chauffée (7) le méthane étant injecté ou soufflé dans les gaz d'échappement (14), transformant ainsi l'oxyde d'azote contenu dans les gaz d'échappement (14) en acide cyanhydrique.

2. Procédé selon la revendication 1, **caractérisé en ce que** dans la chambre de postcombustion (9) est injecté de l'air ou de l'oxygène, éliminant ainsi l'acide cyanhydrique.

3. Procédé selon la revendication 1 ou 2, **caractérisé en ce que** de l'azote est amené au méthane dans la zone non chauffée (7) avant l'injection.

4. Procédé selon l'une quelconque des revendications 1 à 3, **caractérisé en ce que** le méthane est injecté à plusieurs endroits dans la zone non chauffée (7).

5. Procédé selon l'une quelconque des revendications 1 à 4, **caractérisé en ce que** la zone non chauffée (7) comporte des buses (8) par lesquelles, en cas de défaillance, est soufflé de l'azote pour refroidir la bande de métal (5), lors de l'utilisation normale, le méthane étant soufflé par lesdites buses (8) pour réduire l'azote.
